# EUROPÄISCHE PATENTANMELDUNG

(11) **EP 0 911 562 A2**
(43) Veröffentlichungstag der Anmeldung: **28.04.1999**
(21) Anmeldenummer: 98401999.2
(22) Anmeldetag: 05.08.1998
(51) Int. Cl.: F16L 3/10

(54) **Vorrichtung zur Befestigung eines strangförmigen Gegenstandes an einer Unterlage**

(30) Priorität: 18.10.1997 DE 19746121
(71) Anmelder: ALCATEL, 75008 Paris (FR)
(72) Erfinder: Horn, Thomas, 30165 Hannover (DE); Stansbie, Michael, Ing., 30900 Wedemark (DE)
(74) Vertreter: Döring, Roger, Dipl.-Ing.

(57) **Zusammenfassung**

Es wird eine Vorrichtung zur Befestigung eines strangförmigen Gegenstandes an einer Unterlage angegeben. Sie besteht aus einer Schelle (S) aus Federstahl, die einen Befestigungsteil zu ihrer Festlegung an der Unterlage, zwei einteilig mit dem Befestigungsteil verbundene, durch einen Zwischenraum zur Aufnahme des strangförmigen Gegenstandes voneinander getrennte Schenkel und einen Bügel (4) zum Verriegeln der freien Enden der beiden Schenkel aufweist. Der Bügel (4) ist am freien Ende des einen Schenkels der Schelle (S) angebracht und über das mit einer Abkröpfung versehene Ende des anderen Schenkels (2) klappbar. Zum erleichterten Öffnen der Schelle (S) ist die Abkröpfung durch eine in ihrem mittleren Bereich befindliche Unterbrechung (6) in zwei Teile (7,8) unterteilt. Der Bügel (4) hat in seinem mit der Unterbrechung (6) korrespondierenden Bereich eine in Schließposition der Schelle (S) nach außen weisende Ausbauchung (9).

## Beschreibung

Die Erfindung bezieht sich auf eine Vorrichtung zur Befestigung eines strangförmigen Gegenstandes an einer Unterlage, bestehend aus einer Schelle aus Federstahl, die einen Befestigungsteil zu ihrer Festlegung an der Unterlage, Zwei einteilig mit dem Befestigungsteil verbundene, durch einen Zwischenraum Zur Aufnahme des strangförmigen Gegenstandes voneinander getrennte Schenkel und einen Bügel zum Verriegeln der freien Enden der beiden Schenke aufweist, der am freien Ende des einen Schenkels der Schelle angebracht und über das mit einer Abkröpfung versehene Ende des anderen Schenkels klappbar ist (EP 0 562 348 B1).

"Strangförmige Gegenstände", die mit dieser Vorrichtung befestigt werden sollen, sind Kabel und Rohre aller Art. Stellvertretend für alle möglichen Anwendungen wird im folgenden das "Rohe" berücksichtigt. Die Unterlage, an der das Rohr befestigt werden soll, kann eine Wand, ein Mast oder jede beliebige tragfähige Konstruktion sein. Die bisher für diese Zwecke bekannten Montageschellen sind aufwendig gestaltet und zu montieren. Auch die Festlegung des Rohres in den Schellen ist oft schwierig.

Mit Schellen entsprechend der eingangs erwähnten EP 0 562 348 B1 können Rohre einfach an einer Unterlage befestigt werden. Sie sind mit den aus Federstahl bestehenden Schellen auch sicher gehalten, sobald dieselben durch den Bügel verschlossen sind. Der Bügel liegt in Schließposition der Schellen hinter der Abkröpfung des einen Schenkels. Er ist dadurch so gut gesichert, daß die Schellen nicht versehentlich aufgehen können. Diese Schellen haben sich in der Praxis bewährt. Sie sind auch von geübten Personen nur relativ schwer zu öffnen. Das kann sich besonders dann störend bemerkbar machen, wenn eine größere Länge eines Rohres beispielsweise zum Austausch demontiert werden muß.

Der Erfindung liegt die Aufgabe zugrunde, die eingangs geschilderte Vorrichtung in ihrer Handhabung weiter zu vereinfachen.

Diese Aufgabe wird gemäß der Erfindung dadurch gelöst,
- daß die Abkröpfung durch eine in ihrem mittleren Bereich befindliche Unterbrechung in zwei Teile unterteilt ist und
- daß der Bügel in seinem mit der Unterbrechung korrespondierenden Bereich eine in Schließposition der Schelle nach außen weisende Ausbauchung hat.

Diese Vorrichtung besteht aus einer einteiligen Schelle mit dem unverlierbar daran angebrachten Bügel als Verschlußelement. Sie ist daher einfach aufgebaut und einfach zu montieren. Das Anbringen eines Rohres in der Schelle ist einfach, da hierzu nur die beiden Schenkel der aus Federstahl bestehenden Schelle auseinandergedrückt zu werden brauchen. Sie federn in Richtung ihrer Ausgangsstellung zurück, wenn das Rohr in dem dafür vorgesehenen Zwischenraum liegt. Das Rohr ist dann bereits relativ fest gehalten, da die beiden Schenkel wegen der federnden Eigenschaft der Schelle fest an der Oberfläche des Rohres anliegen. Die Schelle wird dann mit dem Bügel verschlossen. Dazu brauchen nur die freien Enden der beiden Schenkel so weit zusammengedrückt werden, bis der an dem einen Schenke angebrachte Bügel über den anderen geschnappt werden kann. Er legt sich dann hinter die Abkröpfung dieses Schenkels. Dabei ist die Ausbauchung des Bügels wegen der Unterbrechung der Abkröpfung gut zugänglich. Ein geeignetes Werkzeug, beispielsweise ein Schraubenzieher, kann zwischen den ausgebauchten Bügel und die Schelle geschoben werden. Der Bügel kann dann zur Öffnung der Schelle leicht über die Abkröpfung gehoben werden. Er bleibt klappbar am anderen Schenkel der Schelle befestigt, so daß dieselbe gegebenenfalls ohne Probleme wieder verschlossen werden kann.

Ein Ausführungsbeispiel des Erfindungsgegenstandes ist in den Zeichnungen dargestellt.

Es zeigen:
Fig. 1 bis 3 eine für die Vorrichtung nach der Erfindung verwendbare Schelle in drei unterschiedlichen Ansichten.
Fig. 4 eine geschlossene Schelle mit darin befindlichem Rohr.

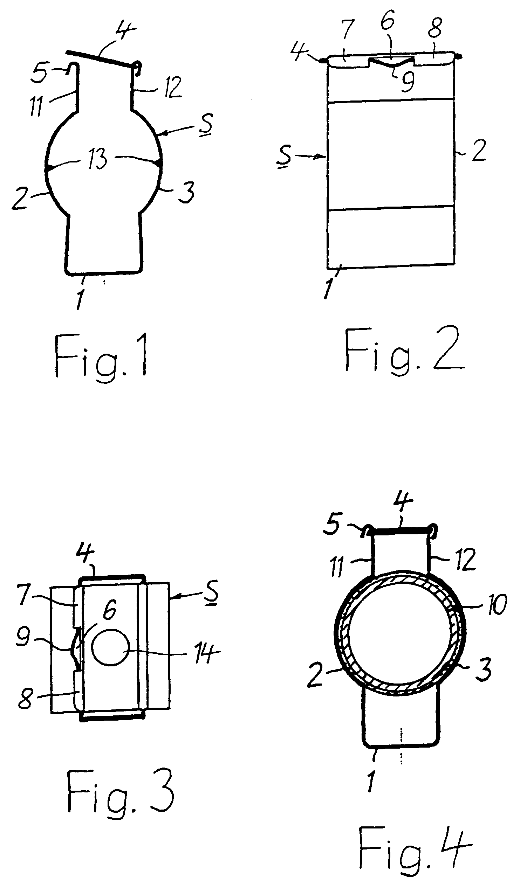

Die in Fig. 1 dargestellte, im wesentlichen U-förmig gestaltete Schelle S besteht aus Federstahl. Sie hat einen Befestigungsteil 1 zu ihrer Festlegung an einer Unterlage und zwei einteilig mit demselben verbundene Schenke 2 und 3. Am freien Ende des einen Schenkels 3 ist ein als etwa rechteckiger Rahmen ausgeführter Bügel 4 schwenkbar, aber unverlierbar angebracht. Der Bügel 4 besteht vorzugsweise aus Stahl. Am freien Ende des anderen Schenkels 2 befindet sich eine bezüglich der Schelle S nach außen weisende Abkröpfung 5. Die Abkröpfung 5 hat in ihrem mittleren Bereich eine Unterbrechung 6, so daß sie in zwei Teile 7 und 8 unterteilt ist. Der Bügel 4 hat an einem seiner längeren Arme eine mit der Unterbrechung 6 korrespondierende Ausbauchung 9, die in der Schließstellung der Schelle S nach außen weist. Sie liegt bei verschlossener Schelle S von außen zugänglich in der Unterbrechung 6 der Abkröpfung 5. Unterbrechung 6 und Ausbauchung 9 sind in bevorzugter Ausführungsform symmetrisch zu den seitlichen Begrenzungen der Schelle S angebracht, so wie es in den Fig. 2 und 3 dargestellt ist.

Die beiden Schenke 2 und 3 sind durch einen Zwischenraum voneinander getrennt, damit ein zu umschließendes Rohr 10 (Fig. 4) darin untergebracht werden kann. Dazu ist der mittlere Bereich der Schenke 2 und 3 außerdem ausgebaucht. Der ausgebauchte Bereich der Schenke 2 und 3 wird der Querschnittsform des zu umschließenden Gegenstandes möglichst gut angepaßt. Im dargestellten Ausführungsbeispiel sind die Ausbauchung zur Aufnahme des einen kreisförmigen Querschnitt aufweisenden Rohres 10 rund ausgeführt.

Von den Ausbauchungen der Schenkel 2 und 3 stehen auf der dem Befestigungsteil 1 abgewandten Seite Stege 11 und 12 ab, an deren freien Enden der Bügel 4 und die Abkröpfung 5 angebracht sind. Die Stege 11 und 12 verlaufen etwa parallel zueinander.

An der inneren Oberfläche der Schenke 2 und 3 können im Bereich der Ausbauchungen Vorsprünge 13 angebracht sein, die sich gegebenenfalls in die Oberfläche des umschlossenen Rohres 10 eindrücken, wenn dessen äußere Schicht weich genug ist. Dadurch kann ein verbesserter Halt des Rohres 10 in der Schelle S erreicht werden. Zum gleichen Zwecke ist es auch möglich, die innere Oberfläche der Schenkel 2 und 3 im Bereich der Ausbauchungen aufzurauhen. Das kann auch dann durchgeführt werden, wenn Vorsprünge 13 vorhanden sind.

Die Schelle S wird beispielsweise wie folgt gehandhabt:

Über ein im Befestigungsteil 1 befindliches Loch 14 wird die Schelle S an einer nicht mit dargestellten Unterlage befestigt, beispielweise an einer Wand. In die noch offene Schelle S wird dann ein Rohr 10 eingebracht. Es liegt in Montageposition im Bereich der Ausbauchungen der Schenkel 2 und 3. Danach wird die Schelle S verschlossen. Dazu werden ihre Schenkel 2 und 3 durch Druck auf die Stege 11 und 12 zusammengedrückt. Der am Schenkel 3 angebrachte Bügel 4 kann dann über den Schenkel 2 geklappt werden. Er legt sich hinter dessen Abkröpfung 5, wenn der auf die Stege 11 und 12 ausgeübte Druck aufgehoben wird. Zum Öffnen der Schelle S wird ein geeignetes Werkzeug zwischen die Ausbauchung 9 des Bügels 4 und den Schenkel 2 der Schelle S geschoben. Der Bügel 4 kann dann leicht über die Teile 7 und 8 der Abkröpfung 5 gehoben und aufgeklappt werden.

## Patentansprüche

1. Vorrichtung zur Befestigung eines strangförmigen Gegenstandes an einer Unterlage, bestehend aus einer Schelle aus Federstahl, die einen Befestigungsteil zu ihrer Festlegung an der Unterlage, zwei einteilig mit dem Befestigungsteil verbundene, durch einen Zwischenraum zur Aufnahme des strangförmigen Gegenstandes voneinander getrennte Schenkel und einen Bügel zum Verriegeln der freien Enden der beiden Schenke aufweist, der am freien Ende des einen Schenkels der Schelle angebracht und über das mit einer Abkröpfung versehene Ende des anderen Schenkels klappbar ist, dadurch gekennzeichnet,
- daß die Abkröpfung (5) durch eine in ihrem mittleren Bereich befindliche Unterbrechung (6) in zwei Teile (7,8) unterteilt ist und
- daß der Bügel (4) in seinem mit der Unterbrechung (6) korrespondierenden Bereich eine in Schließposition der Schelle (S) nach außen weisende Ausbauchung (9) hat.
Vorrichtung nach Anspruch 1, dadurch gekennzeichnet, daß Unterbrechung (6) und Ausbauchung (9) symmetrisch zu den seitlichen Begrenzungen der Schelle (S) angeordnet sind.
